**Europäisches Patentamt**

**European Patent Office**

**Office européen des brevets**

(19)

(11) Veröffentlichungsnummer: **0 193 878**

**B1**

(12) **EUROPÄISCHE PATENTSCHRIFT**

(45) Veröffentlichungstag der Patentschrift:
**02.08.89**

(21) Anmeldenummer: **86102576.5**

(22) Anmeldetag: **27.02.86**

(51) Int. Cl.⁴: **B 65 G 47/68**

(54) **Anordnung zum Umformen eines angeförderten breiten Flaschenstroms zu einem abzufördernden einspurigen Flaschenstrom.**

(30) Priorität: **04.03.85 DE 3507512**

(43) Veröffentlichungstag der Anmeldung:
**10.09.86 Patentblatt 86/37**

(45) Bekanntmachung des Hinweises auf die Patenterteilung:
**02.08.89 Patentblatt 89/31**

(84) Benannte Vertragsstaaten:
**CH DE FR GB IT LI NL**

(56) Entgegenhaltungen:
**EP-A-0 175 292**
**DE-A-3 340 088**
**DE-U-8 427 240**

(73) Patentinhaber: **Seitz Enzinger Noll Maschinenbau Aktiengesellschaft, Neckarauer Strasse 140- 162 Postfach 645, D-6800 Mannheim 1 (DE)**

(72) Erfinder: **Born, Gerhard, Don- Bosco- Strasse 16, D-6530 Bingen (Rhein) (DE)**

## Beschreibung

Die Erfindung betrifft eine Anordnung zum Umformen eines angeförderten breiten Flaschenstroms zu einem abzufördernden einspurigen Flaschenstrom gemäß Oberbegriff Patentanspruch 1.

Bei einer bekannten Anordnung dieser Art (DE-A-3 129 057) ist der Zuförderer für den breiten Flaschenstrom lotrecht zur Förderrichtung der Transportbänder eines Zwischenförderers angeordnet, die (Transportbänder) den Umformbereich bzw. den dortigen Förderbereich mit einer waagerechten Förderfläche bilden und deren Anzahl in Förderrichtung des Zwischenförderers bis auf ein einziges Transportband, nämlich bis auf das den Abförderer bildende Transportband abnimmt. Dem Zwischenförderer ist ein sich vom Zuförderer zum Abförderer hin erstreckendes Führungsgeländer zugeordnet, welches die Transportbänder des Zwischenförderers derart quert, daß sich dort ein sich in Förderrichtung des Zwischenförderers verengender Förderweg ergibt. Über den Zuförderer gelangen die Flaschen des breiten Flaschenstroms auf den Zwischenförderer, wo diese Flaschen zunächst pulkartig aneinander anliegend und zum Teil auch schon an dem Führungsgeländer gleitend mit den Transportbändern des Zwischenförderers mitbewegt werden. Da die Transportbänder des Zwischenförderers, über die sich das Führungsgeländer erstreckt, eine stetig steigende Bandgeschwindigkeit aufweisen, werden die an dem Führungsgeländer gleitenden Flaschen so auseinandergezogen, daß sich zwischen diese Flaschen noch nicht an dem Führungsgeländer gleitende Flaschen einreihen können und somit an dem Führungsgeländer schließlich der einspurige Flaschenstrom gebildet wird. Diese bekannte Anordnung benötigt nicht nur viel Raum für den relativ langen, sich stufenweise verringernden vielspurigen Zwischenförderer und aufwendige Antriebe für die Realisierung der von Transportband zu Transportband steigenden Bandgeschwindigkeit, sondern es werden für das während des Umformens stattfindende Umverteilen der Flaschen auch große Gleitbewegungen benötigt. Ein Großteil der Flaschen muß über weite Strecken freistehend transportiert werden, so daß sich ein Umfallen von Flaschen ebenso wenig vermeiden läßt, wie ein erheblicher Lärmpegel beim Zusammenführen der Flaschen in den einspurigen Flaschenstrom.

Stand der Technik im Sinne des Art. 54 (3) EPÜ ist weiterhin eine Anordnung zum Umformen eines über einen Zuförderer angeförderten breiten Flaschenstroms zu einem über einen Abförderer abzufördernden einspurigen Flaschenstrom (EP-A-175 292). Der zwischen dem Zuförderer und dem Abförderer vorgesehene Umformbereich umfaßt bei dieser Anordnung ein den Transportbändern des Zuförderers im wesentlichen niveaugleich nachgeordnetes Überschubblech mit einer Überschubkante und einen sich an die Überschubkante anschließenden Förderbereich, dessen Förderfläche von bündig nebeneinander liegenden Obertrumen des Transportbandes des Abförderers sowie weiterer Transportbänder gebildet ist und nach Art einer schiefen Ebene quer zur dortigen Förderrichtung zum Obertrum des Abförderers geneigt ist. Die im Umformbereich vorgesehene Überschubkante schließt mit der dortigen Förderrichtung des Förderbereich einen Winkel kleiner als 90° ein, so daß beim Bewegen des breiten Flaschenstroms über die Überschubkante an der Überschubkante orientierte kurze Flaschenreihen vorgebildet werden, die dann anschließend durch einen quer zur Förderrichtung wirkenden Hangabtrieb, der sich durch die vorerwähnte Neigung der Förderfläche ergibt, zu dem einspurigen Flaschenstrom zusammengeführt werden. Diese Anordnung gestattet grundsätzlich ein stoß- und druckloses Umformen des breiten Flaschenstromes in den einspurigen Flaschenstrom bei geringem Platzbedarf, bei relativ geringem konstruktiven Aufwand sowie bei wesentlich vermindertem Lärmpegel. Ein gewisser Nachteil dieser Anordnung ist jedoch, daß die Wirkung des Hangabtriebs nicht nur von einer ausreichenden Neigung der Förderfläche des Umformbereichs, sondern auch von der Reibung zwischen den dortigen Transportbändern und dem Boden der Flaschen und damit letztlich von dem Zustand dieser Transportbänder und/oder von dem Zustand bzw. der Ausbildung der Flaschen an ihrem Boden abhängig ist. Weiterhin ist es notwendig, daß die im Umformbereich vorgesehenen Transportbänder mit ihren Obertrumen möglichst stufenlos aneinander anschließen, um die volle Wirkung des Hangabtriebs zu erhalten. Dies bedeutet auch einen präzisen Unterbau für die Führung der Obertrume dieser Transportbänder.

Bei einer speziellen Ausführung der vorgenannten Anordnung ist auf den Umformbereich folgend noch ein den Förderweg stromab verengendes, elastisches Gegengeländer vorgesehen, welches mit seinem in Förderrichtung hinteren Ende nicht starr befestigt ist, sondern mit einem Gleitschuh auf der geneigten Förderfläche aufliegt. Dieses Gegengeländer dient dazu, solche Flaschen, die sich nicht bereits vollständig in den einspurigen Flaschenstrom eingereiht haben, in diesen Flaschenstrom vollständig einzuordnen. Das Zusammenführen der kurzen Flaschenreihen in den einspurigen Flaschenstrom ist grundsätzlich bereits abgeschlossen, bevor die Flaschen das Gegengeländer passieren, welches auch selbst in der vorgenannten Weise nur aufgrund des durch die geneigte Förderfläche bedingten Hangabtriebs wirksam werden kann.

Der Erfindung liegt die Aufgabe zugrunde, das Umformen eines breiten Flaschenstroms unter Verzicht auf einen aufwendigen und viel Raum benötigenden Umformbereich der eingangs erwähnten bekannten Anordnung zu vereinfachen und eine solche Anordnung derart auszubilden, daß bei geringstmöglicher Gleitbewegung der Flaschen beim Umformen auch auf einfache Weise beliebige Winkel zwischen der Förderrichtung des Zuförderers und der Förderrichtung des Abförderers realisierbar sind, um vorgegebene Raumverhältnisse besser als bisher ausnutzen zu können.

Zur Lösung dieser Aufgabe ist eine Anordnung erfindungsgemäß entsprechend dem kennzeichnenden Teil des Patentanspruches 1 ausgebildet.

Bei der erfindungsgemäßen Anordnung werden aus den jeweils vordersten Flaschen des breiten Flaschenstroms beim Passieren der Überschubkante des Überschubblechs auf dem sich an diese Überschubkante anschließenden Förderbereich kurze Flaschenreihen vorgebildet, die dann ohne die Wirkung eines Hangabtriebs und die damit verbundenen Nachteile durch zwingendes Aufprägen einer Bewegungskomponente, die einen Winkel mit der Förderrichtung dieses Förderbereichs einschließt, zu den einspurigen Flaschenstrom zusammengeführt werden.

Bei einer Ausführungsform der Erfindung wird diese Bewegungskomponente den kurzen Flaschenreihen durch das den Förderweg stromab verengende Führungsmittel aufgeprägt. Bei einer weiteren Ausführungsform der Erfindung bilden im Umformbereich die Förderrichtung des Förderbereichs und die Förderrichtung des Zuförderers miteinander einen Winkel, so daß den kurzen Flaschenreihen hierdurch eine Bewegungskomponente zu ihrem Zusammenführen in den einspurigen Flaschenstrom aufgeprägt wird. Beide vorgenannten Maßnahmen können auch in Kombination zur Anwendung kommen.

Bevorzugt weist die Anordnung am Umfangbereich eine waagerechte Förderfläche auf. Diese Förderfläche kann bei der Erfindung aber auch derart leicht geneigt sein, daß mit dem breiten Flaschenstrom angeförderte umgefallene Flaschen an dieser Förderfläche seitlich wegrollen und damit ausgeschieden werden können.

Weitere Merkmale der Erfindung ergeben sich aus den Unteransprüchen.

Mit der erfindungsgemäßen Anordnung, bei der der von der Förderrichtung des Förderbereichs des Umformbereichs und der Überschubkante des Überschubblechs gebildete Winkel vorzugsweise größer als 12° ist, wird das Umformen des mehrspurigen breiten Flaschenstroms in den einspurigen Flaschenstrom auf verblüffend einfache Weise überaus betriebssicher arbeitend gelöst. Durch die erfindungsgemäße Ausbildung entfallen für den Umformbereich auch lange Förderbänder einschließlich deren Antriebe, wie sie (Förderbänder und Antriebe) bei der eingangs erwähnten bekannten Anordnung (DE-A-3 129 057) erforderlich sind.

Da die Flaschen reihenweise, d.h. als kurze Flaschenreihen dem sich an die Überschubkante anschließenden Förderbereich zugeführt werden und diese Flaschenreihen aus dem Bereich der Überschubkante entfernt werden, bevor die jeweils nächste Flaschenreihe auf diesen Förderbereich gelangt, erfolgt ein störungsfreies Umverteilen der zugeförderten Flaschen auf kurzer Strecke. Ein Umfallen der Flaschen wird hierbei weitestgehend vermieden. Auch arbeitet die Anordnung relativ geräuscharm, da durch ihre Ausbildung im Umformbereich wenig Unruhe innerhalb des Flaschenstroms erzeugt wird.

Die Erfindung ist nachfolgend anhand eines in der Zeichnung mehr oder minder schematisch dargestellten Ausführungsbeispiels beschrieben.

Es zeigen:

Fig. 1    eine Draufsicht auf die erfindungsgemäße Anordnung zum Umformen von Flaschenreihen, bei der die Förderrichtung des Zuförderers mit derjenigen des Abförderers einen Winkel bildet,

Fig. 2    die Anordnung nach Fig. 1, beschickt mit Flaschen,

Fig. 3    ein aus mehreren Gleitblechen gebildetes Überschubblech mit Überschubkante der Anordnung nach Fig. 1,

Fig. 4    eine erfindungsgemäße Anordnung mit einem den einspurigen Flaschenstrom in Förderrichtung des Förderbereichs abfördernden Abförderer und einem im Bereich des Förderbereichs angeordneten Abweiser,

Fig. 5    eine erfindungsgemäße Anordnung mit einem Förderbereich, dessen Förderrichtung mit derjenigen des Zuförderers einen stumpfen Winkel bildet,

Fig. 6    den Übergangsbereich vom Zuförderer zum Förderbereich bei einem Winkel α von 60°.

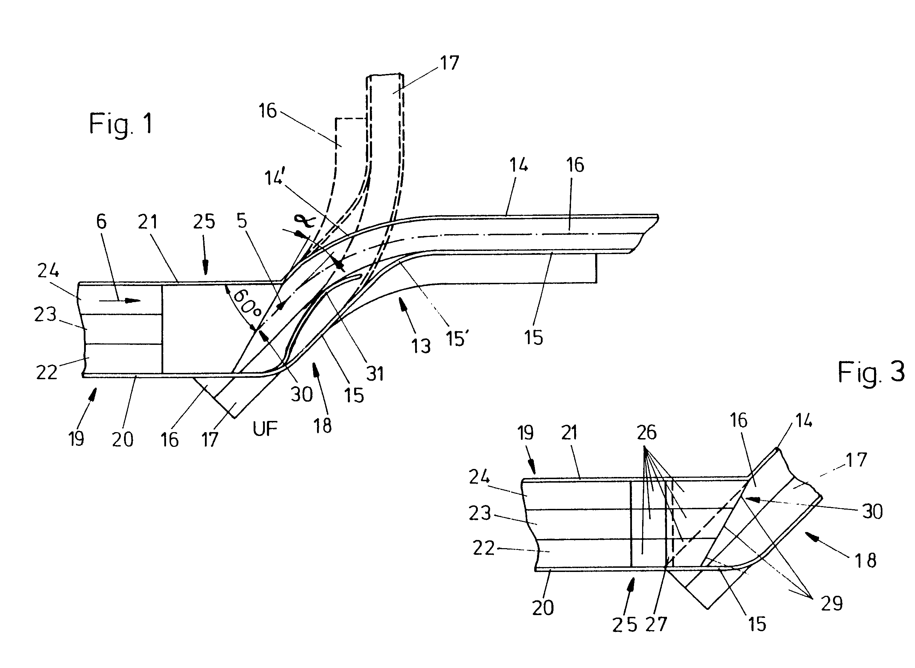

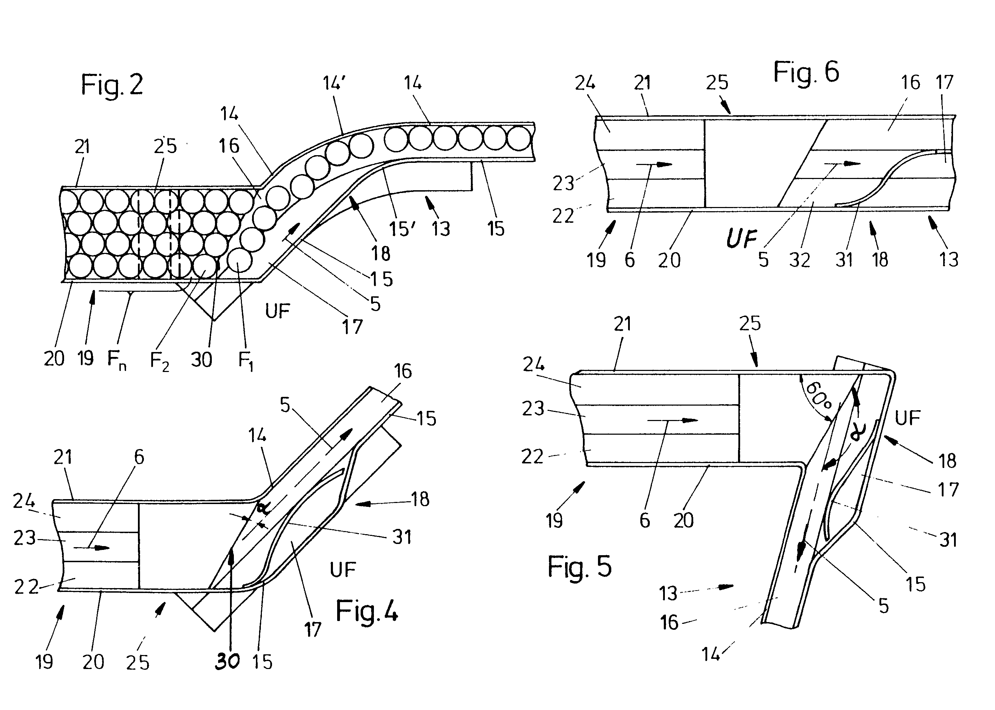

In Fig. 1 ist der Umformbereich UF einer erfindungsgemäßen Anordnung gezeigt, die für das Zuführen der in Fig. 2 angedeuteten Flaschen zum Umformbereich UF einen Zuförderer 19 aufweist, der mehrere, z. B. drei parallel nebeneinander angeordnete Transportbänder 22, 23, 24 aufweist, die endlos und mit gleicher Geschwindigkeit umlaufen. Sie bestehen je weils aus einer Scharnierbandkette und werden mittels einer nicht dargestellten Antriebseinrichtung angetrieben, wobei die Obertrume der Transportbänder 22, 23 und 24 zusammen eine waagerecht verlaufende Förderfläche bilden, die von seitlichen Führungsgeländern 21, 22 begrenzt ist.

Ferner ist ein Abförderer 13 vorgesehen, dessen Förderrichtung 5 einen Winkel mit der Förderrichtung des Zuförderers 19 bildet. Abweichend davon können Zuförderer 19 und Abförderer 13 in der Weise zugeordnet sein, daß die Förderrichtungen 5 und 6 einen stumpfen Winkel bilden, wie Fig. 5 zeigt. Der Abförderer 13 weist seitliche Führungsgelander 14, 15, ein Transportband 16 und in seinem dem Umformbereich UF zugeordneten Förderbereich 18 ein zweites Transportband 17 auf. Beide Transportbänder 16 und 17 sind kurvengängig, beispielsweise in Form von Scharnierbandketten ausgebildet. Sie können aber auch geradlinig verlaufend ausgebildet sein, wie Fig. 4 und 5 zeigen. Das Transportband 17 endet nach dem Umformbereich UF, während das Transportband 16 vom Umformbereich UF aus geradlinig in der Förderrichtung des Zuförderers 19 weitergeführt ist. Das Transportband 16 kann aber auch, wie in Fig. 1 gestrichelt dargestellt ist, unmittelbar nach dem Umformbereich UF enden und das Transportband 17 weitergeführt sein. Dies empfiehlt sich, wenn der einspurige Flaschenstrom annähernd im rechten Winkel zur Förderrichtung 6 des Zuförderers 19 abzuführen ist.

Das Transportband 16 des Abförderers 13 führt zu einer nicht dargestellten Flaschenbehandlungsmaschine, beispielsweise einer Füllmaschine oder Etikettiermaschine. Im Förderbereich 18 sind die Transportbänder 16, 17 mit den Bandobertrumen niveaugleich den Bandobertrumen der Transportbänder 22 bis 24 des Zuförderers 19 zugeordnet. Dabei bilden die Führungsgeländer 14, 15 im Förderbereich 18 Kurvenstücke 14' und 15', deren Radien im wesentlichen dem Kurvenradius der Transportbänder 16 und 17 angepaßt sind. Das Kurvenstück 15' ist jedoch gegenüber dem Kurvenstück 14' unterschiedlich ausgebildet. Es stellt ein den Förderweg im Förderbereich 18 verengendes Führungsmittel dar und ist für diese Funktion über das Obertrum des Transportbandes 17 geführt, um so den Umformbereich UF für die zugeführten kurzen Flaschenreihen $F_1$ bis $F_n$ zu begrenzen.

Im Übergangsbereich der Obertrume des Zuförderers 19 zur gemeinsamen Transportfläche der Transportbänder 16, 17 des Förderbereichs 18 des Abförderers 13 ist ein im wesentlichen niveaugleicher Übergang in der Art eines Überschubblechs 25 vorgesehen. Es ist Bestandteil der Umformstrecke UF und entspricht in seiner Breite der Spurbreite des Zuförderers 19 und ist im einfachen Fall einstückig ausgebildet oder besteht, wie Fig. 3 zeigt, aus mehreren Gleitblechen 26, die jeweils oberhalb einer Umlenkung des Zuförderers 19 vom Obertrum zum Untertrum sowie oberhalb des zugeordneten Transportbandes 16 des Abförderers 13 angeordnet sind. Die Gleitbleche 26 sind an der oberhalb des Transportbandes 16 verlaufenden Überschubseite mit einer Schräge 29 versehen. Hierbei bilden die Schrägen 29 aller Gleitbleche 26 zur sicheren reihenweisen Übergabe der Flaschen an die Transportbänder 16, 17 gemeinsam eine Überschubkante 30, die quer zur Förderrichtung 6 der Transportbänder 22, 23, 24 des Zuförderers 19 verläuft und mit dieser einen Winkel von 60° bildet. Bei dieser Winkelanordnung bilden die Überschubkante 30 und die im Förderbereich 18 vorhandene Förderrichtung 5 einen Winkel $\alpha$ von 12 bis 168°, vorzugsweise 15°. Die die Schräge 29 aufweisenden Gleitbleche 26 können durch ein von unten angreifendes Halteblech 27 fest untereinander verbunden sein, vgl. Fig. 3.

Die Transportbänder 16 und 17 des Abförderers 13 werden mit gleicher oder unterschiedlicher Geschwindigkeit, aber gegenüber den Transportbändern 22, 23, 24 des Zuförderers 19 mit höherer Geschwindigkeit angetrieben. Die Antriebs- und Steuereinrichtungen hierfür sind nicht dargestellt.

Wird nach entsprechender Einstellung der Bandgeschwindigkeiten von Abförderer 13 und Zuförderer 19 auf letzterem ein breiter Flaschenstrom angefördert, dann werden die fortlaufend antransportierten Flaschen in der in Fig. 2 dargestellten Art und Weise über das Überschubblech 25 auf die Transportbänder 16 und 17 des kurvengängigen Abförderers 13 übergeschoben. Die reihenweise auf die Transportbänder 16 und 17 über die Überschubkante 30 geschobenen Flaschen werden durch die Einwirkung der Transportbänder 16, 17 in Richtung des Pfeiles 5 beschleunigt und abgefördert und gelangen unter zusätzlicher Einwirkung des Führungsgeländer-Kurvenstücks 14' in den geradlinigen Teil des Abförderers 13. Dadurch bildet sich bereits nach kurzer Transportstrecke zwischen den Führungsgeländern 14 und 15 ein einspuriger Flaschenstrom aus, der schließlich auf dem Transportband 16 abgefördert wird. Dieser Umformvorgang wird durch die schräge Zuordnung der Transportbänder 16 und 17 des Abförderers 13 im Winkel $\alpha$, vorzugsweise von 15°, zur Überschubkante 25 wesentlich unterstützt.

Wie aus Fig. 3 deutlich zu ersehen ist, wird hierdurch jede auf den Transporteurabschnitt 18 des Umformbereichs UF übergeschobene Flaschenreihe $F_1$ von den Transportbändern 16 und 17 sofort in Transportrichtung weitergeführt und somit aus dem Bereich der Überschubkante 30 entfernt, so daß für die nächste zu übergebende Flaschenreihe $F_2$ Platz für die Übergabe vorhanden ist. Jede Flaschenreihe $F_1$ bis Fn gelangt nacheinander an das Führungsgeländer-Kurvenstück 14' und daraufhin an das Führungsgeländer 14 und wird anschließend mit vorangehend abgeförderten Flaschenreihen in der Förderrichtung des Zuförderers 19 als einspuriger Flaschenstrom abgeführt. Im Bereich der Führungsgeländer-Kurvenstücke 14' und 15' sind Fliehkräfte wirksam, die den Umformvorgang beschleunigen.

Zur störungsfreien und schnellen Ausbildung des einspurigen Flaschenstroms kann es zweckmäßig sein, wie Fig. 1 zeigt, an dem gegenüber der Überschubkante 30 seitlich des Förderabschnitts 18 verlaufenden Führungsgeländer 15 des Abtransporteurs 13 ein sich bis an den Förderweg des Transportbandes 16 erstreckendes Führungsmittel, z. B. einen als Blattfeder, ein dauerelastisches Geländerstück od. dgl. ausgebildeten Abweiser 31 anzuordnen, womit eine jeweils über die Überschubkante 30 auf dem Förderabschnitt 18 gelangte Flaschenreihe $F_1$ bis $F_n$ auf das den einspurigen Flaschenstrom aus dem Umformbereich UF abfördernde Transportband 16 abgedrängt wird.

Es liegt auch im Rahmen der Erfindung, den Zuförderer 19 einschließlich Umformbereich UF zur Abförderseite hin um eine in Förderrichtung 6 des Zuförderers 19 verlaufende horizontale Achse um 1 bis 12°, vorzugsweise 4°, quer zur Förderrichtung 6 zu neigen. Durch diese Maßnahme wird beim Umformvorgang der Hangabtrieb wirksam, so daß einerseits der Umformvorgang beschleunigt wird und andererseits das Ausscheiden von durch den Zuförderer 19 antransportierten umfallenden Flaschen und Scherben begünstigt wird.

Im Rahmen der Erfindung liegt es auch, den Förderbereich 18 des Abförderers 13 dem Zuförderer 19 und dem Überschubblech 25 in der Spurbreite anzupassen in der Weise, daß Zuförderer 19, Überschubblech 25 und Förderbereich 18 in einer Flucht verlaufen, vgl. Fig. 6. Dies ist dann der Fall, wenn der Winkel bei in Transportrichtung 5 des Förderbereichs 18 abfördernden Transportband 16 vorzugsweise 60° beträgt, wobei die Förderrichtungen von Zuförderer 19 und Förderbereich 18 in einer Richtung verlaufen. Diese Anpassung der Spurbreite sieht für den Förderbereich 18 eine den Transportbändern 22 bis 24 des Zuförderers 19 entsprechende Anzahl Transportbänder 16, 17, 32 vor, wobei unterhalb des Überschubblechs 25 die Umlenkungen der Transportbänder 22 bis 24 vom Obertrum zum Untertrum gegenüberliegen den Umlenkungen der Transportbänder 16, 17, 32 vom Untertrum zum obertrum. Auch bei diesem Beispiel kann es zweckmäßig sein, den Zuförderer 19 einschließlich dem aus dem Überschubblech 25 und dem Förderbereich 18 gebildeten Umformbereich UF um eine in den Förderrichtungen von Zuförderer 19 und Förderbereich 18 verlaufende horizontale Achse um 1 bis 12°, vorzugsweise 4°, quer zur Förderrichtung zu neigen, und zwar zu der am abfördernden Transportband 16 und dem zufördernden Transportband 24 verlaufenden Längsseite hin, um den Umformvorgang zu beschleunigen und das Ausscheiden von durch den Zuförderer 19 antransportierten umgefallenen Flaschen und Scherben zu begünstigen.

**Bezugszeichnenliste**

| | |
|---|---|
| 5 | Pfeil (Förderrichtung Abförderer) |
| 6 | Pfeil (Förderrichtung Zuförderer) |
| 13 | Abförderer |
| 14 | Führungsgeländer |
| 15 | Führungsgeländer |
| 14' | Kurvenstück |
| 15' | Kurvenstück |
| 16 | Transportband |
| 17 | Transportband |
| 18 | Förderbereich |
| 19 | Zuförderer |
| 20 | Führungsgeländer |
| 21 | Führungsgeländer |
| 22 ) | |
| 23 ) | Transportbänder |
| 24 ) | |
| 25 | Überschubblech |
| 26 | Gleitbleche |
| 27 | Halteblech |
| 28 | - |
| 29 | Schräge |
| 30 | Überschubkante |
| 31 | Abweiser |
| 32 | Transportband |
| $F_1$ - $F_n$ | Flaschenreihe |
| UF | Umformbereich |
| α | Winkel |

**Patentansprüche**

1. Anordnung zum Umformen eines angeförderten breiten Flaschenstroms zu einem abzufördernden einspurigen Flaschenstrom, mit einem den breiten Flaschenstrom anfördernden Zuförderer (19), dem sich niveaugleich ein Umformbereich (UF) mit einer im wesentlichen waagrechten Förderfläche und ein den einspurigen Flaschenstrom abfördernder Abförderer anschließen, wobei für Zuförderer (19), Umformbereich (UF) und Abförderer (13) seitliche Führungsgeländer (20, 21; 14, 15) vorgesehen sind, von denen die auf gleicher Flaschenstromseite angeordneten Führungsgeländer (20, 15; 21, 14) miteinander verbunden sind, wobei der Umformbereich (UF) einen Förderbereich (18) umfaßt, der sich an eine Überschubkante (30) eines den Obertrumen der Transportbänder (22, 23, 24) des Zuförderers (19) in Förderrichtung (6) des Zuförderers (19) im wesentlichen niveaugleich nachgeordneten und von wenigstens einem Gleitblech (26) gebildeten Überschubblechs (25) anschließt und der eine im Vergleich zum Zuförderer (19) höhere Fördergeschwindigkeit sowie eine breitere Förderfläche als ein den einspurigen Flaschenstrom abfördernder Bereich des Abförderers (13) aufweist und ein ihm zugeordnetes und den Förderweg stromab verengendes Führungsmittel (15', 31) besitzt, wobei die Flaschen des breiten Flaschenstroms nach dem Passieren der Überschubkante (30) ohne Wirkung eines Hangabtriebs zum einspurigen Flaschenstrom zusammengeführt werden, dadurch gekennzeichnet, daß die im Umformbereich (UF) verlaufende Überschubkante (30) sowohl mit der Förderrichtung (6) des Zuförderers (19), als auch mit der Förderrichtung (5) des Förderbereichs (18) einen von einem rechten Winkel abweichenden Winkel einschließt.

2. Anordnung nach Anspruch 1, dadurch gekennzeichnet, daß im Umformbereich (UF) die Förderrichtung (5) des Förderbereichs (18) und die Förderrichtung (6) des Zuförderers (19) miteinander einen Winkel bilden.

3. Anordnung nach Anspruch 2, dadurch gekennzeichnet, daß der Förderbereich (18) von Transportbändern (16, 17) gebildet ist, die geradlinig und in dem erwähnten, zwischen der Förderrichtung (6) des Zuförderers (19) und der Förderrichtung (5) des Förderbereiches (18) gebildeten Winkel zu den Transportbändern (22 - 24) des Zuförderers (19) verlaufend sowie endlos umlaufend ausgebildet sind.

4. Anordnung nach Anspruch 2, dadurch gekennzeichnet, daß den Förderbereich (18) bildende Transportbänder (16, 17) kurvengängig und endlos umlaufend ausgebildet sind, und daß der Förderbereich (18) stromabwärts der Überschubkante (30) des Überschubbleches (25) als kurvengängiger Bereich (14, 15) ausgebildet ist.

5. Anordnung nach einem der Ansprüche 1 bis 4, dadurch gekennzeichnet, daß dem Förderbereich (18) wenigstens zwei Transportbänder (16, 17) nebeneinanderliegend zugeordnet sind, von denen ein Transportband (16 oder 17) über den Umformbereich (UF) hinaus weitergeführt ist und den den einspurigen Flaschenstrom abfördernden Bereich des Abförderers (13) bildet.

6. Anordnung nach einem der Ansprüche 1 bis 5, dadurch gekennzeichnet, daß die Überschubkante (30) des Überschubbleches (25) mit der Förderrichtung (6) des Zuförderers (19) einen Winkel von 60° bildet und sich über wenigstens ein den Umlenkungen der Transportbänder (22 - 24) des Zuförderers (19) von Obertrum zum Untertrum benachbartes Transportband (16, 17, 32) des Förderbereiches (18) erstreckt.

7. Anordnung nach einem der Ansprüche 1 bis 6, dadurch gekennzeichnet, daß der von der Förderrichtung (5) des Förderbereiches (18) und der Überschubkante (30) des Überschubbleches (25) gebildete Winkel (α) 12 - 168°, vorzugsweise 15° beträgt.

8. Anordnung nach einem der Ansprüche 1 bis 7, dadurch gekennzeichnet, daß das Führungsmittel ein stromabwärts der Überschubkante (30) gelegener, in Förderrichtung schräg verlaufender Abschnitt (15') eines der Führungsgeländer (14, 15) des Förderbereichs (18) oder eine Blattfeder, ein elastisches Führungsgeländer oder dgl. Abweiser (31) ist, der an dem gegenüber der Überschubkante (30) am Förderbereich (18) angeordneten Führungsgeländer (15) des den einspurigen Flaschenstrom abfördernden Bereiches des Abförderers (13) befestigt ist.

**Claims**

1. Arrangement, for transforming a wide, inwardly conveyed bottle stream into a single track bottle stream to be conveyed away, with an inward conveyor (19), which conveys the wide bottle stream inwardly and is adjoined at the same level by a transforming region (UF) with a substantially horizontal conveying surface and an outward conveyor conveying the single track bottle stream away, wherein lateral guide rails (20, 21; 14, 15), of which the guide rails (20, 15; 21, 14) arranged on the same side of the bottle stream are one connected with the other, are provided for the inward conveyor (19), the transforming region (UF) and the outward conveyor (13), wherein the transforming region (UF) comprises a conveying region (18), which adjoins a transfer edge (30) of a metal transfer plate (25) formed by at least one metal slide plate (26) arranged substantially at the same level and - in conveying direction (6) of the inward conveyor (19) - downstream of the upper run of the transport belts (22, 23, 24) of the inward conveyor (19), and which displays a higher conveying speed by comparison with the inward conveyor (19) as well as a wider conveying surface than a region of the outward conveyor (13) conveying the single track bottle stream away and possesses guide means (15', 31), which are associated with it and narrow the conveying path downstream, wherein the bottles of the wide bottle stream are after passing the transfer edge (30) guided together into the single track bottle stream without effect of a sloping drive, characterised thereby, that the transfer edge (30) extending in the transforming region (UF) includes an angle differing from a right angle with the conveying direction (6) of the inward conveyor (19) as well as with the conveying direction (5) of the conveying region (18).

2. Arrangement according to claim 1, characterised thereby, that the conveying direction (5) of the conveying region (18) and the conveying direction (6) of the inward conveyor (19) form an angle one with the other in the transforming region (UF).

3. Arrangement according to claim 2, characterised thereby, that the conveying region (18) is formed by transport belts (16, 17), which are constructed to be circulating endlessly as well as extending rectilinearly and at the mentioned angle, which is formed between the conveying direction (6) of the inward conveyor (19) and the conveying direction (5) of the conveying region (18), to the transport belts (22 to 24) of the inward conveyor (19).

4. Arrangement according to claim 2, characterised thereby, that transport belts (16, 17) forming the conveying region (18) are constructed to be circulating endlessly and capable of negotiating curves and that the conveying region (18) is constructed as curve-negotiating region (14, 15) downstream of the transfer edge (30) of the metal transfer plate (25).

5. Arrangement according to one of the claims 1 to 4, characterised thereby, that at least two transport belts (16, 17) lying one beside the other are associated with the conveying region (18), of which one transport belt (16 or 17) is continued further beyond the transforming region (UF) and forms the region of the outward conveyor (13) conveying the single track bottle stream away.

6. Arrangement according to one of the claims 1 to 5, characterised thereby, that the transfer edge (30) of the metal transfer plate (25) forms an angle of 60° with the conveying direction (6) of the inward conveyor (19) and extends over at least one transport belt (16, 17, 32), which is adjacent the deflections of the transport belts (22 to 24) of the inward conveyor (19) from upper run to lower run, of the conveying region (18).

7. Arrangement according to one of the claims 1 to 6, characterised thereby, that the angle (α)

which is formed by the conveying direction (5) of the conveying region (18) and the transfer edge (30) of the metal transfer plate (25), amounts to 12 to 168°, preferably 15°.

8. Arrangement according to one of the claims 1 to 7, characterised thereby, that the guide means is a portion (15'), which lies downstream of the transfer edge (30) and extends obliquely in conveying direction, of one of the guide rails (14, 15) of the conveying region (18) or a leaf spring, an elastic guide rail or the like deflecting member (31), which is fastened at the guide rail (15), which is arranged opposite the transfer edge (30) at the transforming region (UF), of the region of the outward conveyor (13) conveying the single track bottle stream away.

**Revendications**

1. Installation destinée à transformer un courant large de bouteilles en inn courant de sortie sur une seule file, cette installation comportant un transporteur (19), qui amène les bouteilles en un courant large et auquel se raccordent au même niveau une zone (UF) de transformation à surface de transport sensiblement horizontale et un transporteur de sortie qui emmène les bouteilles sur une file unique, des rebords latéraux (20, 21; 14, 15) de guidage étant prévus pour ce transporteur (19) d'alimentation, cette zone (UF) de transformation et ce transporteur (13) de sortie, ceux de ces rebords (20, 15; 21, 14) qui sont disposés d'un même côté d'u courant de bouteilles étant reliés entre eux, la zone (UF) de transformation comportant un secteur (18) de transport, lequel fait suite à une arête (30) de transfert dune plaque (25) de transfert formée d'au moins une plaquette (26) de glissement qui est disposée après les brins superieurs des bandes transporteuses (22, 23, 24) du transporteur (19) d'alimentation dans le sens d'avance de ce dernier et sensiblement au même niveau, ce secteur de transport ayant une vitesse d'avance plus grande que ledit transporteur (19) d'alimentation ainsi qu'une surface de transport plus large que la partie du transporteur (13) de sortie qui emmène le courant de bouteilles sur une seule file, et comportant un élément (15', 31) de guidage, qui coopère avec lui et rétrécit en aval la voie de transport, les bouteilles du courant large étant rassemblées, sans action d'entraînement d'un plan incliné, en un courant sur une seule file après avoir dépassé l'arête (30) de transfert, installation caractérisée en ce que:

l'arête (30) de transfert, disposée dans la zone (UF) de transformation forme, aussi bien avec le sens (6) d'avance du transporteur (19) d'alimentation qu'avec le sens (5) d'avance du secteur (18) de transport, un angle qui n'est pas un angle droit.

2. Installation selon la revendication 1, caractérisée en ce que, dans la zone (UF) de transformation, le sens (5) de l'avance dans le secteur (18) de transport et le sens (6) de l'avance din transporteur (19) d'alimentation font entre eux un certain angle.

3. Installation selon la revendication 2, caractérisée en ce que le secteur (18) de transport est formé de bandes transporteuses (16, 17), qui avancent en ligne droite, qui forment avec les bandes transporteuses (22 - 24) du transporteur (19) d'alimentation l'angle précité entre le sens (5) de l'avance dans ce secteur (18) de transport et le sens (6) de l'avance de ce transporteur d'alimentation (19) et qui sont sans fin.

4. Installation selon la revendication 2, caractérisée en ce que les bandes transporteuses (16, 17), qui forment le secteur (18) de transport, avancent en courbe et en ce que ce secteur (18) de transport est un secteur (14', 15') à avance en courbe, en aval de l'arête (30) de transfert faisant partie de la plaque (25) de transfert.

5. Installation selon l'une des revendications 1 à 4, caractérisée en ce qu'au moins deux bandes transporteuses (16, 17), disposés côte à côte, coopèrent avec le secteur (18) de transport, l'une d'elles (16 ou 17) étant prolongée au-delà de la zone (UF) de transformation et formant la partie du transporteur (13) de sortie qui emmène les bouteilles en un courant sur une seule file.

6. Installation selon l'une des revendications 1 à 5, caractérisée en ce que l'arête (30) de transfert de la plaque (25) de transfert fait un angle de 60° avec le sens d'avance (6) d'avance du transporteur (19) d'alimentation et passe sur au moins l'une des bandes transporteuses (16, 17, 32) du secteur (18) de transport, adjacente à l'emplacement du renvoi, de leur brin supérieur à leur brin inférieur des bandes transporteuses (22 - 24) de ce transporteur (19) d'alimentation.

7. Installation selon l'une des revendications 1 à 6, caractérisée en ce que l'angle (α) formé entre le sens (5) de l'avance dans le secteur (18) de transport et l'arête (30) de transfert de la plaque (25) de transfert est compris entre 12 et 168° et est avantageusement égal à 15°.

8. Installation selon l'une des revendications 1 à 7, caractérisée en ce que l'organe de guidage est un tronçon (15') de l'un (15) des rebords du secteur (18) de transport, disposé obliquement dans le sens de l'avance en aval de l'arête (30) de transfert, ou bien est une lamelle élastique, un rebord élastique ou un déflecteur (31) du même genre qui est fixé, via à vis de cette arête de transfert à ce rebord (15) de la partie située dans ce secteur (18) du transporteur (13) de sortie qui emmène les bouteilles en une seule file.

Fig. 1

Fig. 3

Fig. 6

Fig. 5

Fig. 2

Fig. 4